# EUROPEAN PATENT APPLICATION

(11) **EP 4 793 599 A1**
(43) Date of publication of application: **19.08.2026**
(21) Application number: 25215575.9
(22) Date of filing: 13.11.2025
(51) Int. Cl.: G01D 5/14, G01P 3/481, G01P 3/487

(54) **METHODS AND SYSTEMS FOR MAGNETIC SEGMENT COUNTERS**

(30) Priority: 14.02.2025 MY PI2025001078; 29.04.2025 US 202519193069
(71) Applicant: LSI Corporation, Palo Alto, CA 94304 (US)
(72) Inventor: Theil, Thomas, 11900 Bayan Lepas (MY)
(74) Representative: Dilg, Haeusler, Schindelmann Patentanwaltsgesellschaft mbH

(57) **Abstract**

The subject technology is directed to position sensing. In an embodiment, the subject technology provides a device for segment counting, which includes a top collector with first and second contacts, both associated with a first polarity. A first mount is connected to the top collector. A bottom collector, featuring a third contact with a second polarity distinct from the first, is positioned between and aligned with the first and second contacts along a defined direction. A second mount is attached to the bottom collector. A wire extends between the first and second mounts, oriented non-parallel to the defined direction. Additionally, the first and second deflectors are coupled to the bottom collector, with a portion of the wire positioned between them. There are other embodiments as well.

## Description

### FIELD OF INVENTION

The subject technology is directed to position-sensing devices.

### BACKGROUND OF THE INVENTION

Accurate and reliable position measurement is useful in various industrial and automation applications, including automated storage systems, robotics, transportation, and industrial machinery. In various implementations, several technologies have been used to achieve absolute linear position sensing, but each comes with inherent limitations that restrict their effectiveness, particularly for long-distance measurements.

For example, one of the existing approaches involves the use of trip wire displacement sensors, where a mechanical drum is connected to a wire that moves along with the tracked object. These sensors combine a rotary encoder with a mechanical drum to measure position. However, their applicability is largely confined to vertical setups, and their operational range is limited. Additionally, these systems are prone to mechanical wear and can experience failures if the wire becomes blocked. Because such failures may not be easily detectable, they pose reliability concerns in important applications.

Therefore, new and improved methods and systems are desired.

### BRIEF DESCRIPTION OF THE DRAWINGS

Figure 1A is a simplified diagram providing a sideview of segment counter system 100 according to embodiments of the subject technology.
Figure 1B is a simplified diagram providing an isometric view of segment counter system 100 according to embodiments of the subject technology.
Figure 2 is a simplified diagram providing a sideview of segment counter system 200 according to embodiments of the subject technology.
Figure 3 is a simplified diagram providing a sideview of segment counter system 300 according to embodiments of the subject technology.
Figure 4 is a plot illustrating a charge field for the Wiegand wire of segment counter system 100 according to embodiments of the subject technology.
Figure 5 is a plot illustrating a trigger field for the Wiegand wire of segment counter system 100 according to embodiments of the subject technology.
Figure 6 is a plot illustrating the magnetic field along the Wiegand wire axis for different positions of the magnetic strip in segment counter system 100, according to embodiments of the subject technology.

### DETAILED DESCRIPTION OF THE INVENTION

The subject technology is directed to position sensing. In an embodiment, the subject technology provides a device for segment counting, which includes a top collector with first contacts, associated with a first polarity. A first mount is connected to the top collector. A bottom collector, featuring second contacts with a second polarity distinct from the first, is positioned between and aligned with the first contacts along a defined direction. A second mount is attached to the bottom collector. A wire extends between the first and second mounts, oriented non-parallel to the defined direction. Additionally, the first and second deflectors are coupled to the bottom collector, with a portion of the wire positioned between them. There are other embodiments as well.

As mentioned above, existing techniques for position-sensing devices are inadequate. As an example, an existing approach employs magnetic strip encoders, which consist of a magnetized strip and a read head that detects position. These encoders can be categorized as either incremental or absolute. Incremental encoders require an initial reference position and must track all subsequent movements to determine location, making them unsuitable for applications that require immediate absolute positioning upon startup or after restart due to power failure when moving. Absolute encoders, on the other hand, rely on a magnetically coded strip to directly encode position. However, these systems often involve the use of customized magnetic strips tailored to specific applications, which increases manufacturing costs and reduces their adaptability. Moreover, for accurate detection, these absolute encoders require a long read head capable of detecting multiple code bits at once, adding to the complexity and cost of the system. Some other absolute encoders attempt to function using the same customized encoded magnetic strips but require the sensor head to move a certain distance before an absolute position can be retrieved, effectively making them pseudo-absolute encoders rather than true absolute position sensors.

Battery-powered counters represent another alternative for absolute position measurement. These systems use electronic counters powered by batteries to track movement and store positional information. However, reliance on batteries introduces maintenance challenges, as they require regular replacement and pose risks of power failure in long-term or extreme (high or low) temperature applications. This makes battery-powered solutions less desirable in industrial settings where continuous, maintenance-free operation is required.

It is to be appreciated that embodiments of the subject technology provide position measurement techniques that allow for absolute positioning without requiring movement at startup, and they can be configured to be compatible with existing standard magnetic strips to reduce cost and complexity and operate without the need for an external power source or battery. As an example, embodiments of the subject technology utilizing Wiegand or pulse wire for segment counting in a linear encoder system.

For example, Wiegand wire is a bistable magnetic element capable of generating electrical pulses when exposed to a changing magnetic field. This characteristic allows for an energy-harvesting system, eliminating the need for external power sources or batteries. Performance may be enhanced by incorporating ferromagnetic elements to optimize the magnetic field, ensuring stable and consistent pulse generation. Unlike conventional incremental encoders that require initialization, the subject technology allows for absolute position sensing, allowing immediate position retrieval without requiring prior movement. Moreover, by leveraging standard magnetic strips, the system remains cost-effective while providing a robust and reliable solution for long-distance absolute position measurement.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the subject technology is not intended to be limited to the embodiments presented, but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

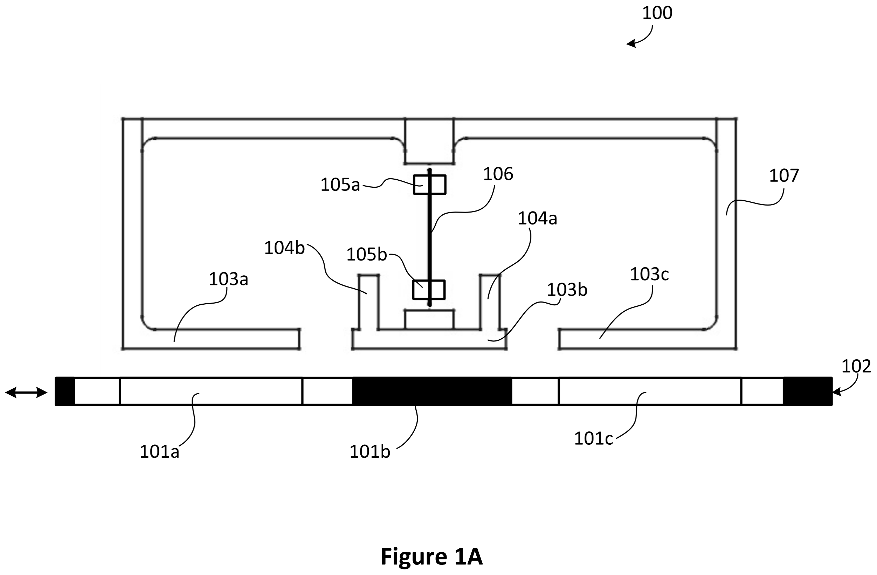

Figure 1A is a simplified diagram providing a sideview of segment counter system 100 according to embodiments of the subject technology. This diagram is merely an example, which should not unduly limit the scope of the claims. One of ordinary skill in the art would recognize many variations, alternatives, and modifications. In various implementations, segment counter 100 may be configured to detect and count segments along the magnetic strip 102 for position measurement applications. For example, the term "segment counter" may refer to a device or assembly configured to detect, measure, or count segments or intervals along a path or surface. The segment counter may include various components for sensing magnetic fields, generating signals, or processing information related to position or movement. In some cases, the segment counter 100 may be used in linear position measurement systems. In other cases, the segment counter 100 may be adapted for use in rotary position measurement systems. In this case, each segment corresponds to a defined angle. Magnetic strip 102 may comprise a plurality of magnetic poles arranged in sequence along its length.

In some implementations, the magnetic strip 102 may have two or more rows of magnetic poles. This configuration may allow for increased resolution or redundancy in position measurement applications, which may facilitate the generation of pulses by the segment counter 100 as the segment counter 100 moves relative to the magnetic strip 102. As shown in Figure 1A, magnetic strip 102 includes first magnetic pole 101a, second magnetic pole 101b, and a third magnetic pole 101c. In some implementations, the magnetic poles may alternate in polarity along the length of magnetic strip 102. As an example, the terms "first magnetic pole," "second magnetic pole," and "third magnetic pole" may refer to regions of a magnetic material exhibiting distinct magnetic field orientations. These poles may be arranged in various patterns or sequences to create a detectable magnetic field variation along a surface or path. For example, the term "magnetic strip" may refer to an elongated structure comprising magnetic material arranged to produce a pattern of magnetic fields. The magnetic strip may be used in various applications for position sensing, data storage, or other purposes requiring a spatially varying magnetic field.

Segment counter 100 may include wire 106 positioned relative to magnetic strip 102. In the configuration shown in Figure 1A, wire 106 may be oriented substantially vertically relative to magnetic strip 102. However, in some cases, wire 106 may be oriented orthogonally relative to magnetic strip 102, depending on the specific application requirements. For example, wire 106 comprises a bistable magnetic wire or a Wiegand wire. For example, wire 106 may be configured as Wiegand wire, bistable magnetic wire, pulse-generating magnetic wire, or others. For example, the term "Wiegand wire" may refer to a specially processed ferromagnetic wire exhibiting the Wiegand effect. The Wiegand wire may be used to generate voltage pulses in response to changes in an external magnetic field, and may have various applications in sensing, energy harvesting, or signal generation. As an example, wire 106 may comprise a magnetic core (e.g., a soft magnetic core) and a magnetic shell (e.g., a hard magnetic shell), which may enable wire 106 to generate pulses in response to changes in the surrounding magnetic field as segment counter 100 moves relative to magnetic strip 102. For instance, the magnetic core may be composed of materials such as permalloy, iron-based alloys, or other highly permeable ferromagnetic materials. The magnetic shell may be composed of cobalt-based or nickel-based alloys, or other high-coercivity materials, designed to retain magnetic properties and create a stable interface for polarity switching.

In some implementations, a coil (not shown) may be positioned around wire 106 to harvest electrical pulses generated by the Wiegand effect. In some cases, multiple segment counters 100 may be used on the same magnetic strip 102. This arrangement may provide redundancy or allow for simultaneous measurement at different points along the magnetic strip 102. The magnetic strip 102 may be configured with discrete magnets in some implementations. This construction may allow for customization of the magnetic field pattern or replacement of individual magnets if needed.

Top collector 107 may be included in segment counter 100. Top collector 107 may comprise first contact 103a and second contact 103c. In some implementations, first contact 103a and second contact 103c may be associated with a first polarity. For example, the terms "first contact," "second contact," and "third contact" may refer to ferromagnetic elements designed to collect magnetic field from the stripe magnets. These contacts serve the purpose of collecting and directing magnetic flux and do not imply any electronic functionality within the invention. These contacts may be arranged in various configurations to interact with other components of a sensing or measurement system. For example, the term "top collector" may refer to a component positioned above other elements of a device that is configured to collect, direct, or manipulate magnetic fields. Top collector 107 may comprise various shapes, sizes, and materials suitable for interacting with magnetic fields and may work in conjunction with other components to achieve desired sensing or measurement capabilities. For example, first contact 103a and second contact 103c of top collector 107 may be aligned against magnets of the magnetic strip 102. This alignment may enable segment counter 100 to detect changes in the magnetic field as segment counter 100 moves along magnetic strip 102.

In some implementations, second contact 103c may be positioned beside or proximate to first contact 103a. It is to be appreciated that the terms "beside" and "proximate to" as used herein are not limited to direct adjacency and may include configurations where one or more intervening elements are present between the contacts. These intervening elements may include structural components, insulators, or other functional elements that do not impede the intended magnetic interaction between the first and second contacts. For example, second contact 103c may be separated from first contact 103a by a predefined distance or by intervening nonmagnetic or magnetic materials, depending on the implementation.

According to some embodiments, second contact 103c may be aligned relative to first contact 103a along a first direction. For example, the term "aligned relative to" may refer to an arrangement where second contact 103c is positioned in a manner that maintains a consistent spatial relationship with first contact 103a along a designated axis. This alignment may be linear, parallel, staggered, offset, or rotationally symmetric, depending on the specific design of the segment counter system. It should be understood that the alignment along the first direction does not require direct adjacency and may include configurations where the contacts are spaced apart, positioned at an angle, or separated by additional structural or functional elements, as long as the alignment preserves the intended magnetic interaction between the contacts.

In some examples, wire 106 may be aligned along a second direction, the second direction being different from the first direction. For instance, the second direction may be perpendicular, oblique, or variably inclined with respect to the first direction, depending on the configuration of the segment counter system 100.

Segment counter 100 may also include a bottom collector. The bottom collector may comprise a third contact 103b. In some cases, the third contact 103b may be associated with a second polarity, which may be opposite from the first polarity associated with the first contact 103a and the second contact 103c. Wire 106 may be coupled to first mount 105a and second mount 105b. For example, first mount 105a may be coupled to or a part of top collector 107, second mount 105b may be coupled to or a part of the bottom collector. These mounts may provide in addition to the concentration of the magnetic field a structural support and proper positioning for the components of the segment counter 100. For example, wire 106 is configured to be substantially perpendicular relative to a first direction, where the first direction may be defined by the alignment of the contacts along the magnetic strip 102. For example, wire 106 is configured to interact with the magnetic fields generated by the magnetic poles of magnetic strip 102 as the segment counter 100 moves relative to magnetic strip 102. As the segment counter 100 moves along the magnetic strip 102, the interaction between the Wiegand wire 106 and the alternating magnetic poles may generate pulses that can be used for position measurement and counting purposes.

In some implementations, segment counter 100 includes components to shape and direct the magnetic field. For example, a first deflector 104a and a second deflector 104b may be positioned near the wire 106 to help optimize the magnetic field interaction between the wire 106 and the magnetic strip 102. For example, the terms "first deflector" and "second deflector" may refer to structures or components designed to influence, shape, or redirect magnetic fields. Deflectors may be made of various materials and take different forms to achieve desired effects on magnetic field distribution within a device. The arrangement of these components allows segment counter 100 to detect position changes by generating pulses as wire 106 passes over the alternating magnetic poles of magnetic strip 102. This configuration may enable accurate position measurement in various linear and rotary applications. For example, first deflector 104a and second deflector 104b may contribute to shaping the magnetic field around and along the wire 106. In some implementations, the first deflector 104a may be substantially perpendicular to a first direction, where the first direction may be defined by the alignment of the contacts along magnetic strip 102. The first deflector 104a may be substantially parallel to the second deflector 104b.

In some cases, the first deflector 104a and the second deflector 104b may comprise ferromagnetic material. Examples of ferromagnetic materials may include, without limitation, iron, cobalt, nickel, alloys thereof, and other magnetic materials capable of directing and concentrating magnetic fields. The use of ferromagnetic material in these components may help to concentrate and direct the magnetic field around the wire 106. The top collector 107 may also comprise a ferromagnetic material. This configuration may allow the top collector 107 to effectively collect and direct magnetic flux from the magnetic strip 102 toward the wire 106. In some implementations, the bottom collector and the first deflector 104a may comprise different ferromagnetic fields. This difference in ferromagnetic properties may contribute to the overall magnetic field shaping around the wire 106. The first mount 105a and the second mount 105b play a role in the magnetic field shaping arrangement. These mounts may also provide support and positioning for wire 106 relative to the other components of the segment counter 100, including the first deflector 104a and the second deflector 104b.

The combination of these magnetic field shaping elements (including the first deflector 104a, the second deflector 104b, the top collector 107, and the mounts) may work together to create a desired magnetic environment for the wire 106. This arrangement may help ensure reliable pulse generation as the segment counter 100 moves along the magnetic strip 102, enabling accurate position measurement and counting. It is to be appreciated that deflectors 104a and 104b may serve an important role in optimizing the magnetic field distribution around the Wiegand wire 106. In some aspects, while the top collector 107 and bottom collector may effectively increase the overall magnetic field amplitude at the charging position of the Wiegand wire 106, they may not fully address the issue of field inhomogeneity along the wire's length. This inhomogeneity, particularly at the trigger position, may potentially lead to inconsistent or poor-quality pulse generation.

In some implementations, deflectors 104a and 104b are designed as ferromagnetic elements that function as magnetic field shaping components. These deflectors may be strategically positioned and oriented to modify the local magnetic field distribution around the Wiegand wire 106. Specifically, the deflectors 104a and 104b may be configured to reduce the magnetic field strength at the end of the wire closer to the magnetic poles of the magnetic strip 102. By selectively reducing the field strength at one end of the Wiegand wire 106, the deflectors 104a and 104b may contribute to creating a more homogeneous magnetic field along the entire length of the wire. This more uniform field distribution may be advantageous for several reasons. A more homogeneous magnetic field along the Wiegand wire 106 may lead to more consistent and reliable pulse generation as the segment counter 100 moves relative to the magnetic strip 102. By fine-tuning the magnetic field distribution, the deflectors 104a and 104b may help optimize the sensitivity of the Wiegand wire 106 to changes in the external magnetic field. A more uniform field may allow the Wiegand wire 106 to function effectively over a wider range of positions relative to the magnetic strip 102. By shaping the magnetic field, the deflectors 104a and 104b may help mitigate the effects of external magnetic interference on the Wiegand wire 106.

In some cases, the shape, size, orientation, and material properties of the deflectors 104a and 104b may be carefully configured to achieve the desired field-shaping effect. The specific configuration of these deflectors may be tailored to complement the characteristics of the Wiegand wire 106, the top collector 107, the bottom collector, and the magnetic strip 102 to optimize overall system performance. It is to be appreciated the use of deflectors 104a and 104b in this manner may provide an innovative approach to addressing the challenges of magnetic field inhomogeneity in Wiegand wire-based sensing systems.

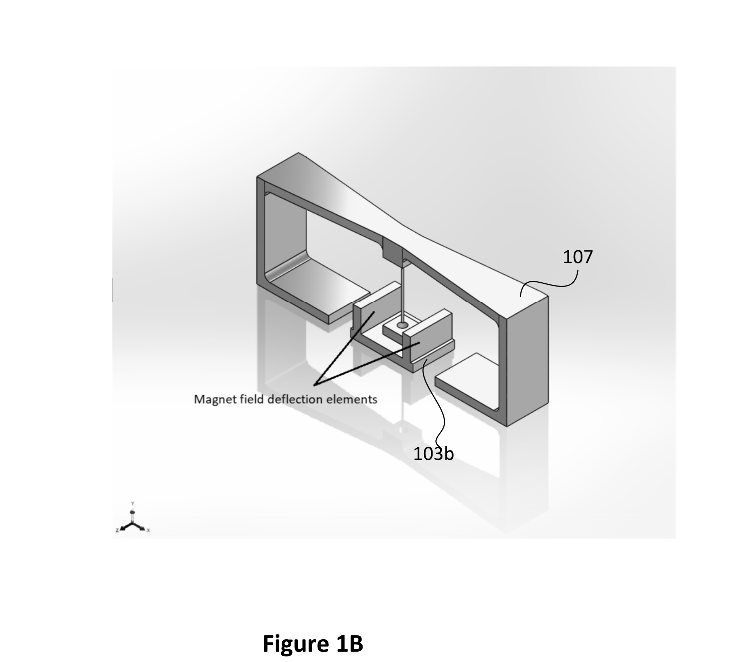

Figure 1B is a simplified diagram providing an isometric view of segment counter system 100 according to embodiments of the subject technology. This diagram is merely an example, which should not unduly limit the scope of the claims. One of ordinary skill in the art would recognize many variations, alternatives, and modifications. For example, segment counter system 100 includes top collector 107 and a bottom collector that includes contact 103b.

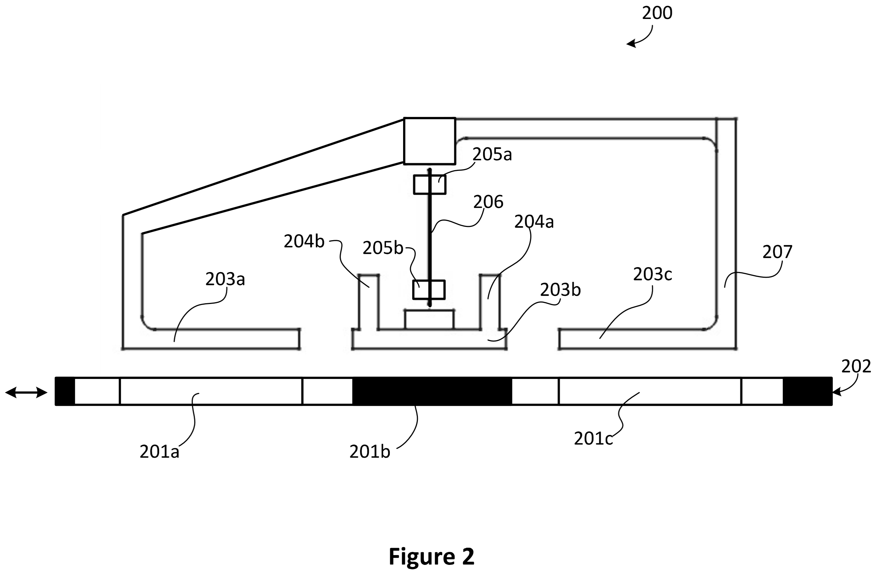

Figure 2 is a simplified diagram providing a sideview of segment counter system 200 according to embodiments of the subject technology. This diagram is merely an example, which should not unduly limit the scope of the claims. One of ordinary skill in the art would recognize many variations, alternatives, and modifications.

Similar to segment counter system 100 of Figure 1A, segment counter system 200 includes a magnetic strip 202 with magnetic poles 201a, 201b, and 201c, arranged along its length. In some examples, segment counter system 200 also comprises a wire 206, positioned between a top collector 207 and a bottom collector. Wire 206 may be coupled to first mount 205a and second mount 205b. For example, first mount 205a may be coupled to or a part of top collector 207, and second mount 205b may be coupled to or a part of the bottom collector. In some cases, top collector 207 may include first contact 203a and second contact 203c, and the bottom collector 203b may include third contact 203b. In some embodiments, a first deflector 204a and a second deflector 204b may be positioned near the wire 206 to help optimize the magnetic field interaction between the wire 206 and the magnetic strip 202.

Depending on the implementation, segment counter system 200 may be configured with a different spatial arrangement of the deflectors and/or collectors to modify the magnetic field interaction with wire 206. The deflectors may be angled, curved, or segmented to further control the field distribution and reduce sensitivity to variations in movement speed. For example, first deflector 204a and second deflector 204b may positioned at an adjusted angle relative to the wire 206 (not shown), altering how the magnetic flux is directed. This arrangement may improve pulse stability under certain motion profiles or reduce magnetic interference from adjacent components.

In other cases, segment counter system 200 may incorporate a differently shaped top collector 207, with variations in curvature, thickness, or placement to enhance magnetic field collection. As an example, top collector 207 may feature an asymmetrical, angled design to enhance magnetic flux collection from magnetic strip 202. The spacing between the collectors and deflectors may also be adjusted to optimize response time, sensitivity, or energy efficiency, depending on the application.

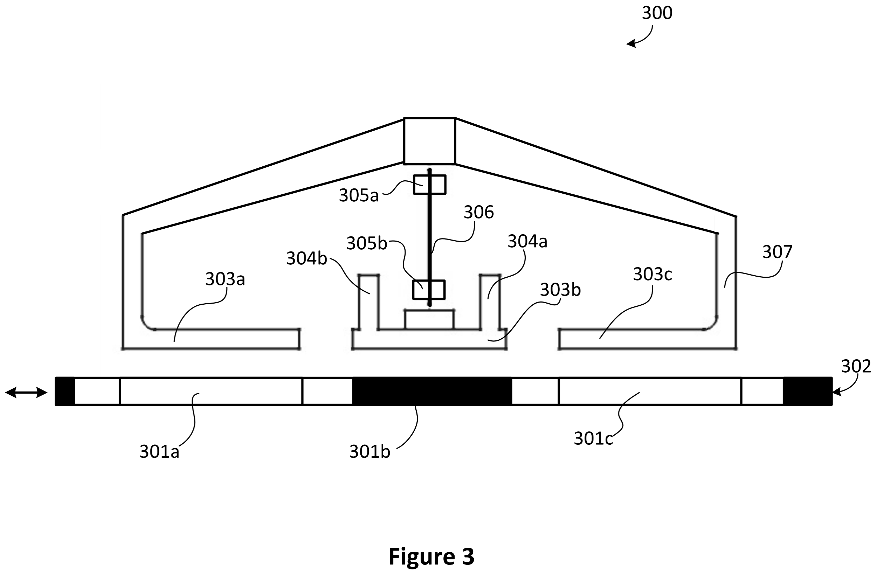

Figure 3 is a simplified diagram providing a sideview of segment counter system 300 according to embodiments of the subject technology. This diagram is merely an example, which should not unduly limit the scope of the claims. One of ordinary skill in the art would recognize many variations, alternatives, and modifications.

Similar to segment counter system 100 of Figure 1A, segment counter system 300 includes a magnetic strip 302 with magnetic poles 301a, 301b, and 301c, arranged along its length. In some examples, segment counter system 300 also comprises a wire 306, positioned between a top collector 307 and a bottom collector. Wire 306 may be coupled to first mount 305a and second mount 305b. For example, first mount 305a may be coupled to or a part of top collector 307, and second mount 305b may be coupled to or a part of the bottom collector. In some cases, top collector 307 may include first contact 303a and second contact 303c, and the bottom collector 303b may include third contact 303b. In some embodiments, a first deflector 304a and a second deflector 304b may be positioned near wire 306 to help optimize the magnetic field interaction between wire 306 and magnetic strip 302. As previously noted, variations of segment counter system 300 can include different spatial arrangements and geometries of the deflectors, collectors, and/or mounts to adapt to specific application requirements. For example, top collector 307 may feature an expanded or tapered structure, which may increase magnetic flux collection from magnetic strip 302.

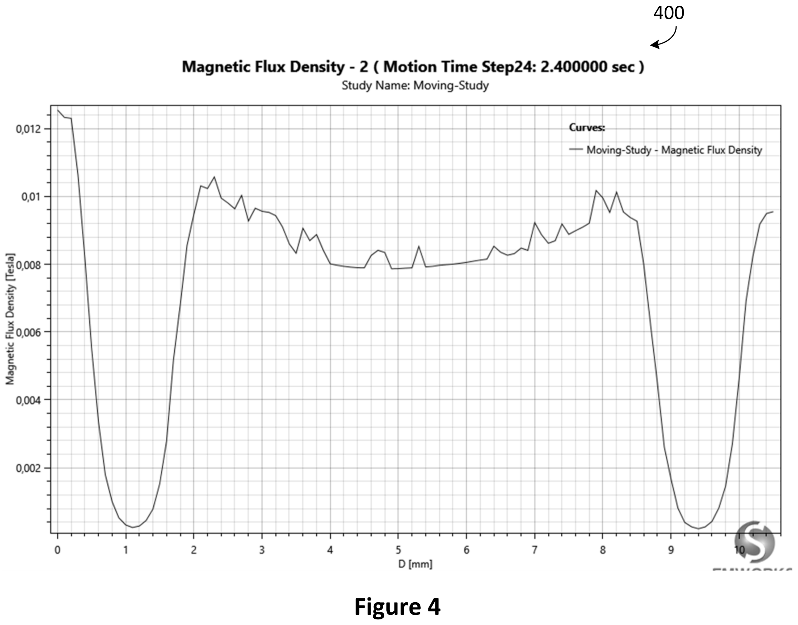

Figure 4 is a plot illustrating a charge field for the Wiegand wire of segment counter system 100 according to embodiments of the subject technology. For example, Figure 4 provides a graphical representation of the magnetic flux density along the wire axis, illustrating the charge field characteristics for the Wiegand wire in the segment counter system. The graph, generated from a simulation study labeled "Moving-Study," displays the variations in magnetic flux density (in Tesla) for the position of the read head 100 in relation to the magnetic strip 102 as shown in figure 1. For this position, the magnetic field through the Wiegand wire has a maximum. The plotted curve demonstrates regions of flux intensity fluctuations, highlighting areas of field enhancement and reduction due to the interaction between the ferromagnetic elements and the Wiegand wire. Notably, the charge field maintains a strength exceeding 8 mT along the whole wire length, ensuring sufficient magnetization for reliable pulse generation. Additionally, the incorporation of deflection elements contributes to improved field homogeneity, reducing nonlinearity to approximately ±10%.

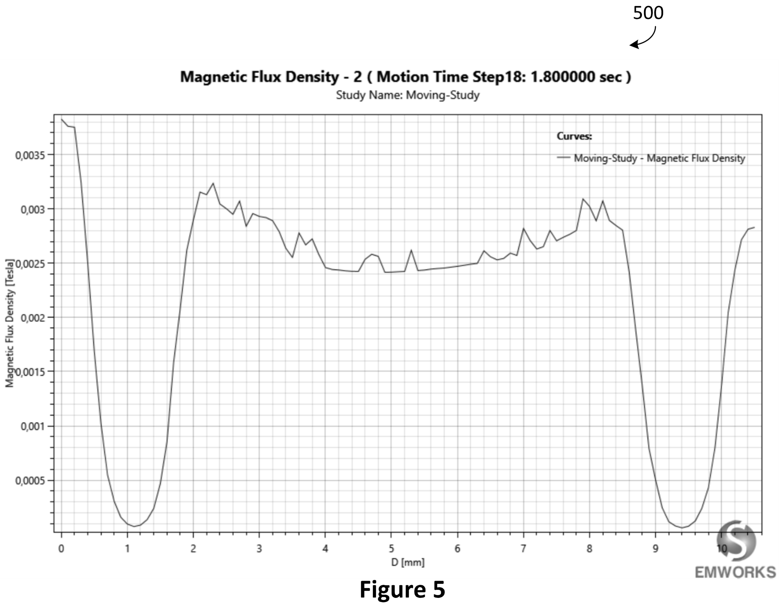

Figure 5 is a plot illustrating a trigger field for another positioning of read head 100 in relation to the magnet strip 102 for the Wiegand wire of segment counter system 100 according to embodiments of the subject technology. For example, Figure 5 provides a graphical representation of the magnetic flux density along the Wiegand axis, illustrating the trigger field characteristics for the Wiegand wire in the segment counter system. The graph, derived from a simulation study labeled "Moving-Study," depicts how the magnetic flux density (measured in Tesla) varies as a function along the wire. This plot specifically focuses on the triggering conditions required for the Wiegand wire to generate stable and reproducible pulses. An observation is the presence of fluctuations in the magnetic field, particularly at the peaks and valleys, which indicate variations in field strength along the wire's length. These fluctuations must remain within a controlled range to ensure that the triggering threshold is met reliably.

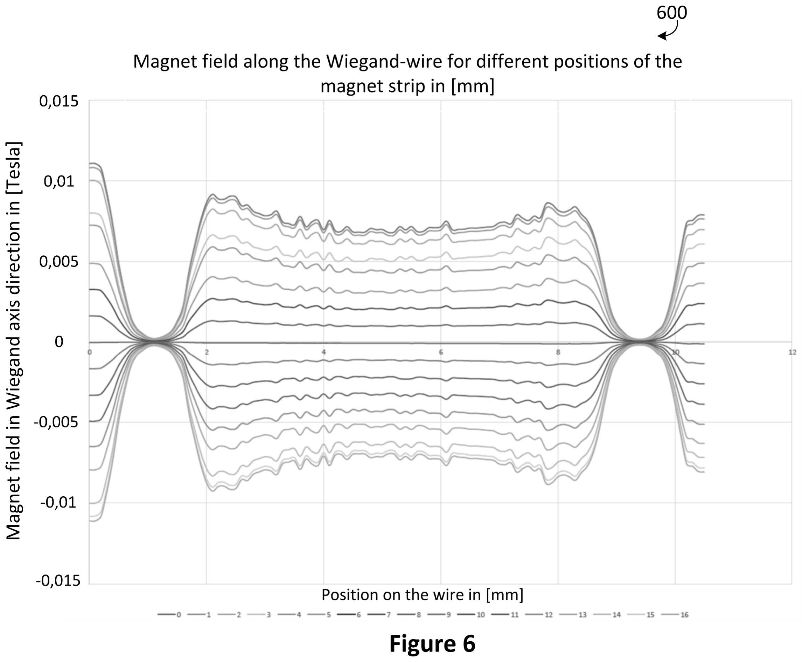

Figure 6 is a plot 600 illustrating the magnetic field along the Wiegand wire axis for different positions of the magnetic strip in segment counter system 100, according to embodiments of the subject technology. For example, Figure 6 provides a graphical representation of the magnetic flux density (in Tesla) along the Wiegand wire, highlighting the behavior of the magnetic field as the magnetic strip moves relative to the read head 100.

As shown, the magnetic field along the wire is influenced by the ferromagnetic elements 105a and 105b, which serve as magnetic terminations near the ends of the Wiegand wire (in the shown examples at approximately 1.1 mm and 9.7 mm, respectively). These terminations create "waists" in the field where the magnetic flux near these points approaches zero. This design ensures that only the magnetic field between 105a and 105b is relevant for the system's operation, providing a controlled region for charging and triggering.

As the magnetic strip moves relative to the read head 100, the magnetic field along the Wiegand wire transitions from a maximum (e.g., position 0) through zero (e.g., position 8) to a minimum (e.g., position 16). A further movement would result in an inverse distribution. For instance, in position 0, the Wiegand wire is charged, while between positions 10 and 11, the wire is triggered, generating the characteristic pulse. Plot 600 illustrates the homogeneous transition of the magnetic field component along the wire during the change from positive charging to negative charging via the triggering condition. This homogeneity is beneficial for maintaining the high pulse quality observed in the system. Additionally, the uniformity of the magnetic field along the wire enhances the reliability and repeatability of pulse generation, further ensuring robust operation under varying conditions.

According to an aspect of the present disclosure, a device is provided. The device includes a top collector comprising a first contact and a second contact, the first contact and the second contact being associated with a first polarity. The device includes a first mount coupled to the top collector. The device includes a bottom collector comprising a third contact, the third contact being associated with a second polarity, the second polarity being different from the first polarity, the third contact being positioned between the first contact and the second contact, the third contact being aligned relative to the first contact and the second contact along a first direction. The device includes a second mount coupled to the bottom collector. The device includes a wire coupled to the first mount and the second mount, the wire being non-parallel relative to the first direction. The device includes a first deflector and a second deflector coupled to the bottom collector, a portion of the wire being positioned between the first deflector and the second deflector.

According to other aspects of the present disclosure, the device may include one or more of the following features. The wire may be substantially perpendicular relative to the first direction. The first deflector may be substantially perpendicular relative to the first direction. The first deflector may be substantially parallel relative to the second deflector. The top collector may comprise a ferromagnetic material. The first deflector may comprise a ferromagnetic material. The wire may comprise a Wiegand wire. The wire may comprise a soft magnetic core and a hard magnetic shell. The wire may comprise a pulse wire. The bottom collector and the first deflector may comprise different ferromagnetic materials. The first contact and the second contact may be aligned against magnets of a magnetic strip.

According to another aspect of the present disclosure, a device is provided. The device includes a magnetic strip comprising a plurality of poles, the plurality of poles comprising a first pole and a second pole. The device includes a segment counter comprising: a top collector comprising a first contact and a second contact, the first contact being aligned against the first pole, the first pole being associated with a first polarity, the first contact and the second contact being aligned along a first direction; a bottom collector comprising a third contact, the third contact being associated with a second polarity, the second polarity being different from the first polarity, the third contact being aligned against the second pole; a wire coupled to the top collector and the bottom collector, the wire being non-parallel relative to the first direction; and a first deflector and a second deflector coupled to the bottom collector, a portion of the wire being positioned between the first deflector and the second deflector. In some cases, the term "aligned against" is not limited to direct physical contact and may include configurations where the first contact is positioned at a certain spacing from the first pole. In some implementations, the first contact may be aligned directly opposite, laterally adjacent, or positioned at an angular offset relative to the first pole, depending on the implementation.

According to other aspects of the present disclosure, the device may include one or more of the following features. The plurality of poles may further comprise a third pole, the second contact being aligned against the third pole. The plurality of poles may comprise alternating magnetic poles. The top collector and the bottom collector may comprise a ferromagnetic material. The wire may be substantially perpendicular relative to the first direction. The wire may comprise a Wiegand wire.

According to another aspect of the present disclosure, a device is provided. The device includes a magnetic disk comprising a plurality of poles, the plurality of poles comprising a first pole and a second pole. The device includes a segment counter comprising: a first collector comprising a first contact aligned against the first pole, the first pole being associated with a first polarity; a second collector comprising a second contact, the second contact being associated with a second polarity, the second polarity being different from the first polarity, the second contact being aligned against the second pole; a wire coupled to the first collector and second collector; and a first deflector and a second deflector coupled to the second collector, a portion of the wire being positioned between the first deflector and the second deflector.

According to other aspects of the present disclosure, the device may include one or more of the following features. The wire may comprise a Wiegand wire. The wire may comprise a pulse wire.

An important concept of this disclosure involves the use of ferromagnetic elements not only to collect and amplify magnetic fields at specific positions or sections of the wire but also to employ additional ferromagnetic elements as deflectors. These deflectors serve to partially redirect the magnetic field, effectively reducing its amplitude for the wire in certain locations. The combined effect of these collecting and deflecting elements is to create a more homogeneous magnetic field environment, which is important for reliable pulse generation in Wiegand wire or similar pulse wire systems. The ferromagnetic elements responsible for collecting and deflecting the magnetic field may be implemented as discrete components or, where design considerations permit, integrated into combined structures. It is understood functions of collecting and deflecting the field for the Wiegand wire can be identified and achieved, regardless of the physical implementation. An integrated approach may offer advantages in terms of simplified assembly processes and potential cost reductions in production.

It is important to note that the magnetic field optimization techniques described herein are not limited to linear applications. These principles can be equally applied to rotary systems, offering particular benefits for large-diameter rotary encoders. Furthermore, these techniques may prove especially valuable in complex automation systems, such as automated storage and retrieval systems (AS/RS), where robotic units may need to navigate both linear paths and curved transitions between storage rows.

An additional advantage of the system described herein, which utilizes a standard magnetic strip, is the ease with which multiple reading heads can be incorporated on the same strip. This feature opens up possibilities for enhanced safety systems or other applications requiring redundant or multi-point sensing capabilities.

While the above is a full description of the specific embodiments, various modifications, alternative constructions and equivalents may be used. Therefore, the above description and illustrations should not be taken as limiting the scope of the subject technology which is defined by the appended claims.

## Claims

1. A device comprising:
a top collector comprising a first contact, the first contact being associated with a first polarity;
a first mount coupled to the top collector;
a bottom collector comprising a second contact, the second contact being associated with a second polarity, the second polarity being different from the first polarity, the second contact being positioned beside the first contact, the second contact being aligned relative to the first contact along a first direction;
a second mount coupled to the bottom collector;
a wire coupled to the first mount and the second mount, the wire being aligned along a second direction, the second direction being different from the first direction; and
a first deflector and a second deflector coupled to the bottom or the top collector, a portion of the wire being positioned between the first deflector and the second deflector.

2. The device of claim 1, wherein
the wire is substantially perpendicular relative to the first direction.

3. The device of claim 1 or 2, wherein
the first deflector is substantially perpendicular relative to the first direction.

4. The device of any one of the claims 1 to 3, wherein
the first deflector is substantially parallel relative to the second deflector.

5. The device of any one of the claims 1 to 4, wherein
the top collector and/or the bottom collector comprises a ferromagnetic material.

6. The device of any one of the claims 1 to 5, wherein
the first deflector comprises a ferromagnetic material.

7. The device of any one of the claims 1 to 6, wherein
the wire comprises
(i) a Wiegand wire,
(ii) a magnetic core and a magnetic shell, and/or
(iii) a pulse wire.

8. The device of any one of the claims 1 to 7, wherein
the bottom collector and the first deflector comprise different ferromagnetic fields.

9. The device of any one of the claims 1 to 8, wherein
the first contact and the second contact are aligned against magnets of a magnetic strip.

10. A device comprising:
a magnetic strip comprising a plurality of poles, the plurality of poles comprising a first pole and a second pole; and
a segment counter comprising:
a top collector comprising a first contact and a second contact, the first contact being aligned against the first pole, the first pole being associated with a first polarity, the first contact and the second contact being aligned along a first direction;
a bottom collector comprising a third contact, the third contact being associated with a second polarity, the second polarity being different from the first polarity, the third contact being aligned against the second pole;
a wire coupled to the top collector and the bottom collector, the wire being aligned along a second direction, the second direction being different from the first direction; and
a first deflector and a second deflector coupled to the bottom collector, a portion of the wire being positioned between the first deflector and the second deflector.

11. The device of claim 10, wherein
the plurality of poles further comprises a third pole, the second contact being aligned against the third pole;
and/or
the plurality of poles comprises alternating magnetic poles.

12. The device of claim 10 or 11, wherein
the top collector and the bottom collector comprise a ferromagnetic material.

13. The device of any one of the claims 10 to 12, wherein
the wire is substantially perpendicular relative to the first direction;
and/or
the wire comprises a Wiegand wire.

14. A device comprising:
a magnetic disk comprising a plurality of poles, the plurality of poles comprising a first pole and a second pole; and
a segment counter comprising:
a first collector comprising a first contact aligned against the first pole, the first pole being associated with a first polarity;
a second collector comprising a second contact, the second contact being associated with a second polarity, the second polarity being different from the first polarity, the second contact being aligned against the second pole;
a wire coupled to the first collector and second collector; and
a first deflector and a second deflector coupled to the second collector, a portion of the wire being positioned between the first deflector and the second deflector.

15. The device of claim 14, wherein
the wire comprises
(i) a Wiegand wire and/or
(ii) a pulse wire.
